Europäisches Patentamt

European Patent Office

Office européen des brevets

(19)

(11) Veröffentlichungsnummer: **0 193 165**
**B1**

(12) **EUROPÄISCHE PATENTSCHRIFT**

(45) Veröffentlichungstag der Patentschrift: **06.06.90**

(21) Anmeldenummer: **86102429.7**

(22) Anmeldetag: **25.02.86**

(51) Int. Cl.⁵: **B 64 D 11/06**

(54) **Fluggastsitz in flammhemmender Ausführung.**

(30) Priorität: **28.02.85 DE 3507085**

(43) Veröffentlichungstag der Anmeldung:
**03.09.86 Patentblatt 86/36**

(45) Bekanntmachung des Hinweises auf die
Patenterteilung:
**06.06.90 Patentblatt 90/23**

(84) Benannte Vertragsstaaten:
**AT BE CH DE FR GB IT LI NL SE**

(56) Entgegenhaltungen:
**GB-A-1 446 013**
**GB-A-2 116 838**
**GB-A-2 137 492**
**US-A-3 512 192**
**US-A-4 349 494**

(73) Patentinhaber: **METZELER SCHAUM GMBH**
**Donaustrasse 51**
**D-8940 Memmingen (DE)**

(72) Erfinder: **Heitmann, Ulrich, Dr.**
**Gotenstrasse 1**
**D-8940 Memmingen (DE)**

(74) Vertreter: **Seibert, Rudolf, Dipl.-Ing. et al**
**Tattenbachstrasse 9**
**D-8000 München 22 (DE)**

EP 0 193 165 B1

Courier Press, Leamington Spa, England.

## Beschreibung

Die Erfindung bezieht sich auf einen Fluggastsitz in flammhemmender Ausrüstung mit einer Sitz- und Rückenlehnenpolsterung aus Polyurethan-Schaumstoff, die mit einer flammhemmenden Schicht verkleidet und mit einem flammhemmend ausgerüsteten Bezugsstoff überzogen ist.

Ein derartiger Sitz ist aus der GB—A—2137492 bekannt. Dabei besteht die das eigentliche Schaumstoffpolster umgebende flammhemmende Schicht aus einem flammhemmenden Polysiloxan, das zwar eine hohe Flammfestigkeit, jedoch keinerlie Luftdurchlässigkeit aufweist, so daß der Sitzkomfort eines derart verkleideten Polsters, insbesondere bei langer Benutzung, stark abfällt, und damit nicht den gewünschten Anforderungen entspricht.

Ferner ist aus der GB—A—2116838 ein Polsterteil für Möbel oder Betten bekannt, bei dem zur Erhöhung der Flammfestigkeit ein flexibles Hüllmaterial verwendet wird, das mit einem flammhemmenden Material getränkt ist, bei dem bei Erwärmung ein Gas entsteht, das eine entstehende Flamme auslöscht oder verhindert.

Schließlich ist aus der US—A—4349494 ein Verfahren bekannt, einen Schaumstoff dadurch flammfest auzurüsten, daß auf seiner Oberfläche ein flammwidrig ausgerüstetes Schaumstoffreaktionsgemisch aufgesprüht oder ein derartiges Gemisch zunächst in eine Schäumform eingesprüht wird. Eine derartige Schutzschicht entspricht aber auch nicht den heutigen Sicherheitsanforderungen der FAA und beinhaltet darüberhinaus auch eine Absenkung des Sitzkomforts wegen einer verringerten Luftdurchlässigkeit.

Im Gegensatz dazu muß nach dem Prüfbestimmungen der FAA (Federal Aviation Administration) eine Schaumstoffpolsterung in flammhemmender Ausführung für zwei Minuten einer Ölbrennerflamme von 110 Grad Celsius ausgesetzt werden können, wobei der dann auftretende Gewichtsverlust des Sitzpolsters maximal 10% betragen darf, ohne daß ein Weiterglimmen oder Abtropfen von Schaumstoffschmelze auftritt.

Der vorliegenden Erfindung liegt daher die Aufgabe zugrunde, einen Fluggastsitz in flammhemmender Ausführung zu schaffen, bei dem das Schaumstoffpolster selbst den strengen Anforderungen an die Flammfestigkeit genügt und den FAA-Test erfüllt, ohne daß dabei Einbußen an Sitzkomfort gegenüber herkömmlichen Sitzen auftreten, und ohne daß eine Gewichtserhöhung oder ein vorzeitiger Verschleiß zu befürchten ist.

Zur Lösung dieser Aufgabe ist erfindungsgemäß vorgesehen, daß zwischen dem Sitz- bzw. Rückenlehnenpolster und dem Bezugsstoff zumindest auf den von den Sitzgestellteilen nicht abgedeckten Flächen eine flammhemmend getränkte Polyurethan-Schaumstoff-Folie in einer Stärke von 5 bis 30 Millimeter, insbesondere von 10 bis 25 Millimeter angeordnet ist, die mittels eines flammwidrig ausgerüsteten Klebers vollflächig mit dem Polster verklebt ist.

Zur flammwidrigen Ausrüstung der Schaumstoff-Folie eignet sich besonders eine Tränkung mit in Chloroprenlatexbinder enthaltenem Aluminiumoxydhydrat und Antimontrioxyd. Die Tränkung beträgt dabei 350—450 Gew.-%, bezogen auf das Rohgewicht der unbehandelten Schaumstoff-Folie.

Ein derartiger Fluggastsitz ist einfach herzustellen und liegt in seiner Flammwidrigkeit weit unter den Mindestanforderungen in den entsprechenden Bestimmungen.

Anhand einer schematischen Zeichnung ist der Aufbau eines derartigen, flammhemmend ausgerüsteten Fluggastsitzes nach der Erfindung näher erläutert.

Dabei zeigen:

Fig. 1 eine perspektivische Ansicht eines Sitz- und Rückenlehnenpolsters für einen Fluggastsitz,

Fig. 2 einen Querschnitt durch das Kopfteil der Rückenlehnenpolsterung, entsprechend der Schnittlinie II—II nach Fig. 1 und

Fig. 3 einen Längsschnitt durch das Sitzpolster.

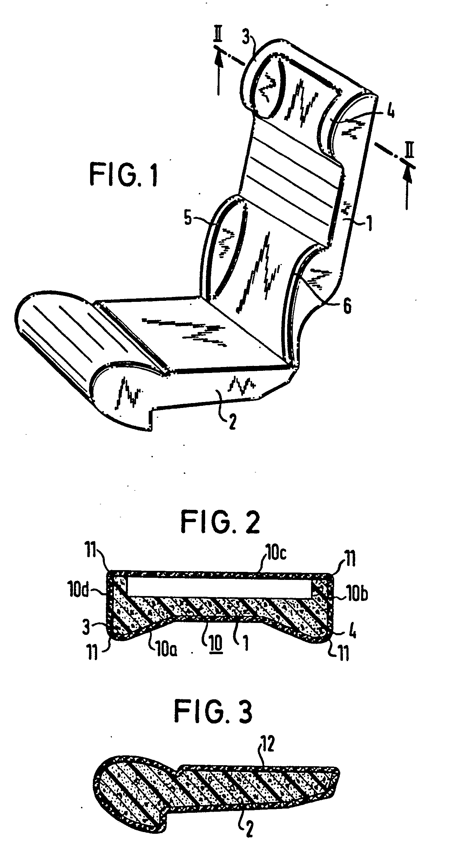

Wie aus Fig. 1 zu ersehen ist, besteht die Polsterung eines herkömmlichen Fluggastsitzes aus einer Rückenlehnenpolsterung 1 sowie einer Sitzpolsterung 2, die üblicherweise aus einem Polyurethan-Polyäther-Schaumstoff gefertigt sind. Dabei können diese Teile aus einem Block geschnitten oder direkt in einer Form als Kalt- oder Heißschaum geschäumt sein. Die Formschäumung empfiehlt sich besonders für das Rückenlehnenpolster 1, da dieses eine relativ zerklüftete Oberfläche mit den beiden seitlichen Kopfstützen 3 und 4 und den beiden unteren seitlichen Führungen 5 und 6 aufweist.

Die hier in der Figur sichtbaren Flächen sowie die hintere Seitenfläche sind im allgemeinen nicht von den eigentlichen Sitzgestellteilen abgedeckt und müssen daher besonders flammhemmend ausgerüstet sein. Dies erfolgt—wie aus den Schnitten nach Fig. 2 und 3 ersichtlich ist—durch Abdecken mit einer flammhemmend ausgerüsteten Polyurethan-Schaumstoff-Folie. Nach Fig. 2, die einen Querschnitt durch das Kopfteil des Rückenlehnenpolsters 1, entsprechend der Schnittlinie II—II nach Fig. 1, zeigt, ist das Kopfteil 1 mit den seitlichen Kopfstützen 3 und 4 vollflächig mit einer Schaumstoff-Folie 10 abgedeckt, die in noch zu beschreibender Weise flammhemmend ausgerüstet ist. Diese Folie 10 kann dabei entsprechend den offenliegenden Seiten aus 4 Folienabschnitten 10a, b, c und d auf das eigentliche Schaumstoffpolster 1 mittels eines flammwidrig ausgerüsteten Klebers aufgeklebt sein, wobei die Stoßkanten 11 in Folienbahnen 10a bis 10d ebenfalls mit diesem Kleber verklebt sind.

In gleicher Weise ist das Sitzpolster 2, entsprechend dem Längsschnitt durch dieses Polster nach Fig. 3, mit einer flammhemmend ausgerüsteten Schaumstoff-Folie 12 allseitig umklebt. Für diese flammhemmend ausgerüstete Schaumstoff-Folie wird zweckmäßigerweise ein Polyäther-Polyurethan-Schaumstoff mit einem Raumgewicht von etwa 16 kg/m$^3$ verwendet, die getränkt sind mit einer flammhemmenden Verbindung aus z.B. 60 bis 70% Aluminiumoxydhydrat, 2 bis 3% Antimontrioxyd sowie 30 bis 40% Gew.-% Chloroprenlatex als Binder und den üblichen Stabilisatoren.

Eine derart flammhemmend ausgerüstete Folie wird dann in einer Stärke von etwa 10 mm auf das eigentliche Schaumstoff-Polster aufgeklebt, wobei an besonders gefährdeten Stellen auch eine dickere Folie eingesetzt werden kann.

Dabei ist es selbstverständlich auch möglich, statt eines Aufklebens dieser flammhemmend ausgerüsteten Schaumstoff-Folie die Folie direkt in eine Schäumform einzulegen und mit dem eigentlichen Polsterwerkstoff zu hinterschäumen.

Ein derart ausgerüstetes Sitz- und Rückenpolster wurde entsprechend dem eingangs beschriebenen Test aus einer Entfernung von 102 mm mit einer Kerosinflamme von 1035°—das entspricht einer Strahlungsintensität von 11,5 W/cm²—2 Minuten bestrahlt. Der anschließend gemessene Gewichtsverlust betrug lediglich 2% und liegt damit wesentlich unter dem zulässigen Gewichtsverlust von 10%. Eine Brandausbreitung erfolgte dabei nur im direkt beflammten Bereich ohne weiterzuglimmen oder ein Abtropfen von Schaumstoffschmelzen zu zeigen. Es zeigte sich, daß die flammhemmend ausgerüstete Schaumstoff-Folie im Bereich der Beflammung vollständig karbonisiert war und damit eine optimale thermische Isolierschicht bildete, so daß das innenliegende eigentliche Schaumstoff-Polster voll geschützt war.

Weiter Tests haben ergeben, daß ein derartig ausgerüstetes Sitzpolster keinerlei Einbußen an Sitzkomfort und der erforderlichen Luftdurchlässigkeit gegenüber herkömmlichen Polsterungen aufwies.

**Patentansprüche**

1. Fluggastsitz in flammhemmender Ausführung mit einer Sitz- und Rückenlehnenpolsterung (1; 2) aus Polyurethan-Schaumstoff, die mit einer flammhemmenden Schicht verkleidet und mit einem flammhemmend ausgerüsteten Bezugsstoff überzogen ist, dadurch gekennzeichnet, daß zwischen dem Sitz- bzw. Rückenlehnenpolster (1; 2) und dem Bezugsstoff zumindest auf den von den Sitzgestellteilen nicht abgedeckten Flächen eine flammhemmend getränkte Polyurethan-Schaumstoff-Folie (11; 12) in einer Stärke von 5 bis 30 mm, insbesondere 10 bis 25 mm angeordnet ist, die mittels eines flammwidrig ausgerüsteten Klebers vollflächig mit dem Polster (1; 2) verklebt ist.

2. Fluggastsitz nach Anspruch 1, dadurch gekennzeichnet, daß die Tränkung mit in Chloprenlatexbinder enthaltenen Aluminiumoxydhydrat und Antimondtrioxyd erfolgt.

3. Fluggastsitz nach Anspruch 2 dadurch gekennzeichnet, daß die Tränkung 350 bis 450 Gewichtsprozent, bezogen auf das Rohgewicht der unbehandelten Schaumstoff-Folie beträgt.

**Revendications**

1. Siège de passager d'avion réalisé de manière ignifuge, comprenant un rembourrage d'assise et un rembourrage de dossier (1; 2) en mousse de polyuréthanne, qui sont habillés d'une couche ignifuge et revêtus d'un tissu de couverture à apprêt ignifuge, caractérisé en ce qu'entre le coussin d'assise ou le coussin de dossier (1; 2) et le tissu de couverture est prévue, au moins sur les surfaces qui ne sont pas recouvertes par des parties du bâti du siège, une feuille en mousse de polyuréthanne (11; 12) imprégnée de manière ignifuge, d'une épaisseur de 5 à 30 mm, notamment de 10 à 25 mm qui est collée au coussin (1; 2) sur toute sa surface au moyen d'une colle ininflammable.

2. Siège de passager d'avion suivant la revendication 1, caractérisé en ce que l'imprégnation s'effectue par de l'hydrate d'oxyde d'aluminium et du trioxyde d'antimoine contenu dans un liant à base de latex de chloroprène.

3. Siège de passager d'avion suivant la revendication 2, caractérisé en ce que l'imprégnation représente de 350 à 450% du poids brut de la feuille de mousse non traitée.

**Claims**

1. A flame-resistant air-line passenger seat comprising seat and back upholstery cushions (1; 2) made of polyurethane foam lined with a flame-resistant coating and covered with a covering material having a flame-resistant finish, characterised in that between the seat and back upholstery cushions (1; 2) and the covering material, at least on those surfaces not covered by the seat frame components, there is arranged a polyurethane foam sheet (11; 12) which is saturated in a flame-resistant material and which has a thickness of 5 to 30 mm, in particular 10 to 25 mm, and which is bonded to the upholstery (1; 2) over the entire surface by means of a flame-resistant adhesive.

2. An air-line passenger seat as claimed in Claim 1, characterised in that the saturation is carried out using aluminium oxihydrate and atimonytrioxide contained in chloroprene latex binding agents.

3. An air-line passenger seat as claimed in Claim 2, characterised in that the saturation amounts to 350 to 450% by weight relative to the weight of the untreated foam sheet.

**FIG. 1**

**FIG. 2**

**FIG. 3**